# EUROPÄISCHE PATENTSCHRIFT

(11) **EP 3 377 715 B1**
(45) Veröffentlichungstag und Bekanntmachung des Hinweises auf die Patenterteilung: **17.07.2019**
(21) Anmeldenummer: 17722402.9
(22) Anmeldetag: 26.04.2017
(51) Int. Cl.: E04H 6/42, B60W 30/00, G08G 1/16

(54) **VERFAHREN ZUM STEUERN EINES SICH TEILAUTONOM BEWEGENDEN FAHRZEUGS INNERHALB EINER BETRIEBSUMGEBUNG UND BAUWERK DAFÜR**
METHOD FOR CONTROLLING A VEHICLE, WHICH MOVES AUTONOMOUSLY WITHIN AN OPERATING ENVIRONMENT AND STRUCTURE THEREFORE
PROCÉDÉ DE COMMANDE D'UN VÉHICULE SE DÉPLAÇANT DE FAÇON AUTONOME À L'INTÉRIEUR D'UN ENVIRONNEMENT ET CONSTRUCTION À CET EFFET

(30) Priorität: 18.05.2016 DE 102016006119
(43) Veröffentlichungstag der Anmeldung: 26.09.2018
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE); FEIST, Christian, 85049 Ingolstadt (DE)
(86) Internationale Anmeldenummer: PCT/EP2017/059963
(87) Internationale Veröffentlichungsnummer: WO 2017/198433

(56) Entgegenhaltungen:
- EP-A1- 2 957 481
- DE-A1-102014 221 771
- US-A1- 2012 188 100

## Beschreibung

Die Erfindung betrifft ein Verfahren zum Steuern wenigstens eines sich zumindest teilautonom innerhalb einer Betriebsumgebung bewegenden Fahrzeugs, innerhalb welcher sich wenigstens eine zum Auslösen eines Anhaltesignals zum Anhalten des oder wenigstens eines Fahrzeugs ausgebildete Auslöseeinrichtung befindet.

In abgeschlossenen Betriebsumgebungen, in denen sich teilautonom oder vollständig autonom betriebene Fahrzeuge bewegen, dient üblicherweise eine fahrzeugseitige Sensorik dazu, Kollisionen mit Objekten in der Umgebung des Fahrzeugs zu vermeiden. Ist davon auszugehen, dass sich in der Betriebsumgebung auch Personen aufhalten, wird als zusätzliche Sicherheitsmaßnahme typischerweise wenigstens eine Auslöseeinrichtung innerhalb der Betriebsumgebung vorgesehen. Mittels dieser kann ein Anhaltesignal ausgelöst werden, welches das Fahrzeug zu einem sofortigen Anhalten veranlasst. Ein bekanntes Beispiel dafür ist ein Notausschalter, der von einer Person betätigt werden kann, wenn beispielsweise eine Kollision eines Fahrzeugs mit ihr selbst oder mit einem Gegenstand oder einer anderen Person droht.

Bei herkömmlichen Verfahren wird ein solches Anhaltesignal jedoch typischerweise von der Auslöseeinrichtung an alle in der Betriebsumgebung befindlichen bzw. an die mit der Auslöseeinrichtung (z. B. per Kabel, Funk oder einem Identifikationsmittel) gekoppelten Fahrzeuge übermittelt, so dass nach dem Auslösen ein vollständiger Betriebsstillstand eintritt. Ein solches generalisiertes Anhalten aller Fahrzeuge führt mithin dazu, dass auch solche Fahrzeuge angehalten werden, die sich im Auslösezeitpunkt völlig problemlos bewegen. Dies gilt insbesondere, wenn eine Vielzahl von Auslöseeinrichtungen in einer Betriebsumgebung mit einer Vielzahl von Fahrzeugen verwendet wird. Zur Beseitigung des Betriebsstillstands ist mithin eine sehr zeitaufwendige Freigabe des Betriebs der Fahrzeuge erforderlich.

Aus DE 10 2014 221 771 A1 ist ein Verfahren zum Betreiben eines Parkplatzes bekannt. Bei diesem Verfahren wird eine Route zu einer Zielposition innerhalb des Parkplatzes für eine autonome Fahrt eines Fahrzeugs auf dem Parkplatz zu der Zielposition ermittelt, wobei zumindest ein Teilstück der Route für weitere Fahrzeuge gesperrt wird, bevor das Fahrzeug das Teilstück durchfährt, sodass das Fahrzeug autonom durch das gesperrte Teilstück der Route fahren kann. Sich innerhalb des Parkplatzes bewegende autonom fahrende Fahrzeuge können während der Führung des eigentlichen Fahrzeugs zu der Zielposition gestoppt werden, wozu eine Auslöseeinrichtung in Form eines Überwachungssystems mit Videokameras vorgesehen ist. Die Auslösefunktion des Verfahrens wird hierbei durch die sich bewegenden Fahrzeuge selbst ausgelöst, sodass die mit der Auslöseeinrichtung kommunizierende Recheneinrichtung die Anhaltefunktion selbst generieren muss und das entsprechende Anhaltesignal an die anzuhaltenden Fahrzeuge sendet.

Aus US 2012/0188100 A1 ist ein kundenspezifisches Parksystem bekannt, umfassend ein mobiles, im Fahrzeug mitgeführtes Gerät, wie beispielsweise ein Smartphone zur Parkunterstützung und eine damit in Kontakt stehende Recheneinrichtung. Die erfassten Positionsdaten sowie eine hierauf basierend erstellte Parkumgebungskarte werden lediglich an das Fahrzeug übermittelt. Etwaige Anhaltesignale werden durch eine am Fahrzeug vorgesehene Kontrolleinheit generiert, die in der Lage ist, Hindernisse zu detektieren und anschließend das zugeordnete Fahrzeug unmittelbar zum Anhalten zu bringen.

Schließlich ist aus EP 2 957 481 A1 ein automatisches Parksystem bekannt, das wiederum darauf basiert, dass am Fahrzeug angebrachte Sensoren, die mit einer entsprechenden Kontrolleinheit des Fahrzeugs in Kontakt stehen, Umgebungsinformationen liefern, die seitens der Kontrolleinheit ausgewertet werden, wobei die Kontrolleinheit gegebenenfalls eine Anhalteinformation generiert, um das Fahrzeug zu stoppen.

Der Erfindung liegt mithin die Aufgabe zugrunde, bei der Steuerung wenigstens eines sich zumindest teilautonom innerhalb der Betriebsumgebung bewegenden Fahrzeugs ein unerwünschtes Anhalten des oder eines Kraftfahrzeugs beim Auslösen der Auslöseeinrichtung zu vermeiden.

Zur Lösung dieser Aufgabe ist bei einem Verfahren der eingangs genannten Art erfindungsgemäß vorgesehen, dass eine der Betriebsumgebung zugeordnete Recheneinrichtung folgende Schritte ausführt:
- Empfangen eines Anhaltesignals einer ausgelösten Auslöseeinrich tung;
- Ermitteln einer Menge von anzuhaltenden Fahrzeugen durch Auswerten von Positionsdaten, welche die Position der ausgelösten Auslöseeinrichtung und eine Position des oder wenigstens eines sich in der Betriebsumgebung befindenden Fahrzeugs beschreiben; und
- Ansteuern des oder wenigstens eines Fahrzeugs zum Anhalten in Abhängigkeit des Auswertungsergebnisses.

Die Erfindung beruht auf der Überlegung, eine der Betriebsumgebung zugeordnete Recheneinrichtung vorzusehen, die als zentrale Koordinationsstelle zwischen der wenigstens einen Auslöseeinrichtung und dem oder wenigstens einem Fahrzeug wirkt und nach dem Empfangen des Anhaltesignals nur jene Fahrzeuge zum Anhalten ansteuert, bei denen aufgrund eines räumlichen Bezugs zur ausgelösten Auslöseeinrichtung davon auszugehen ist, dass ein Anhalten erwünscht ist. Mit anderen Worten erfolgt nach dem Empfangen des Anhaltesignals der ausgelösten Auslöseeinrichtung, typischerweise mittels einer Kommunikationsverbindung, recheneinrichtungsseitig eine Prüfung, ob das Fahrzeug anzuhalten ist oder welche von mehreren Fahrzeugen anzuhalten sind. Unter Auslösen ist dabei sowohl ein aktiv ausgesendetes Nothaltsignals als auch ein passiv erzeugtes Totmannsignal zu verstehen. Mithin werden die Position der ausgelösten Auslöseeinrichtung und die Position des oder wenigstens eines sich in der Betriebsumgebung befindenden Fahrzeugs zum Ermitteln der Menge von anzuhaltenden Fahrzeugen als Teilmenge des wenigstens einen sich in der Betriebsumgebung befindenden Fahrzeugs ausgewertet. Diese Menge kann beispielsweise durch eine Liste repräsentiert werden. Die Steuerung des oder wenigstens eines Fahrzeugs erfolgt dann in Abhängigkeit des Auswertungsergebnisses durch ein Ansteuersignal, das von der Recheneinrichtung an das oder wenigstes ein Fahrzeug übertragen wird.

Die zu ermittelnde Menge kann je nach Betriebsfall leer sein, das Fahrzeug umfassen und/oder wenigstens ein weiteres Fahrzeug umfassen. Es ist selbstverständlich auch denkbar, dass aufgrund der Auswertung der Positionsdaten alle Fahrzeuge innerhalb der Betriebsumgebung in die Menge der anzuhaltenden Fahrzeuge aufgenommen werden. Die Ansteuerung des oder wenigstens eines Fahrzeugs erfolgt dann in Abhängigkeit des Auswertungsergebnisses, also in Abhängigkeit der Menge der anzuhaltenden Fahrzeuge, wobei zweckmäßigerweise das oder jedes zur Menge gehörende Fahrzeug zum Anhalten angesteuert wird und/oder das oder jedes nicht zur Menge gehörende Fahrzeug zum Beibehalten seines Bewegungszustands angesteuert wird.

Mithin ermöglicht das erfindungsgemäße Verfahren vorteilhafterweise eine Selektion des wenigstens einen sich in der Betriebsumgebung bewegenden Fahrzeugs hinsichtlich seiner Position zu jener der ausgelösten Auslöseeinrichtung, so dass nur ein Anhalten jener Fahrzeuge erfolgt, für die das Anhaltesignal als relevant erachtet werden kann. Ein unerwünschtes Anhalten kann so mit Vorteil für Fahrzeuge innerhalb der Umgebung vermieden werden, die keinen räumlichen Bezug zur Position der Auslöseeinrichtung aufweisen, so dass deren Betrieb nicht beeinträchtigt wird. Aber auch für den Fall, dass sich lediglich das Fahrzeug und kein weiteres Fahrzeug in der Betriebsumgebung befindet, können unerwünschte Anhaltemanöver im Fall einer Fehlauslösung der Auslöseeinrichtung oder einer Manipulation vermieden werden, wenn die Auswertung der Positionsdaten keine Relevanz des Anhaltesignals für das Fahrzeug ergibt. Als besonders vorteilhaft erweist sich das Verfahren auch, wenn in der Betriebsumgebung mehrere, insbesondere auch unterschiedlich ausgebildete, Auslöseeinrichtungen verbaut sind, so dass beim Auslösen einer Auslöseeinrichtung nur für deren Position relevante Fahrzeuge angehalten werden.

Bei dem erfindungsgemäßen Verfahren kann wenigstens eine stationäre Auslöseeinrichtung verwendet werden. Dabei handelt es sich typischerweise um eine fest verbaute Auslöseeinrichtung, deren Position der Recheneinrichtung grundsätzlich bekannt sein kann und entsprechend durch die Positionsdaten beschrieben wird. Alternativ oder zusätzlich kann wenigstens eine tragbare Auslöseeinrichtung verwendet werden. Diese kann beispielsweise von einer Person, die sich innerhalb der Betriebsumgebung aufhält oder diese von außerhalb der Betriebsumgebung einsehen kann, mit sich geführt werden und bei Bedarf ausgelöst werden. Da die Position einer solchen Auslöseeinrichtung veränderlich ist, ist es zweckmäßig, wenn die die Position der tragbaren Auslöseeinrichtung beschreibenden Positionsdaten bei und/oder nach dem Auslösen und/oder kontinuierlich von der Recheneinrichtung erfasst werden, worauf weiter unten noch eingegangen wird.

Es wird bei dem erfindungsgemäßen Verfahren zudem bevorzugt, wenn eine als manuelle Betätigungseinrichtung ausgebildete Auslöseeinrichtung verwendet wird. Diese kann beispielsweise als Drückschalter und/oder Berührschalter ausgebildet sein. Grundsätzlich kann eine solche manuelle Betätigungseinrichtung sowohl stationär als auch tragbar vorgesehen sein. Bei dem erfindungsgemäßen Verfahren kann alternativ oder zusätzlich auch eine einen Unterbrechungssensor umfassende Auslöseeinrichtung verwendet werden. Bei dem Unterbrechungssensor kann es sich z.B. um eine Lichtschranke, insbesondere einen Lichtvorhang, handeln. Typischerweise ist eine solche Auslöseeinrichtung stationär vorgesehen und dient beispielsweise der Erfassung eines unerwünschten Betretens der Betriebsumgebung oder eines Teils von ihr. Zu diesen Zwecken kann alternativ oder zusätzlich auch eine einen Näherungssensor umfassende Auslöseeinrichtung verwendet werden.

Es wird bei dem erfindungsgemäßen Verfahren besonders bevorzugt, wenn die Menge der anzuhaltenden Fahrzeuge unter Berücksichtigung wenigstens eines Unterraums der Betriebsumgebung ermittelt wird. Es wird mithin vorgeschlagen, zur Ermittlung der räumlichen Relevanz des Anhaltesignals wenigstens einen Unterraum der Betriebsumgebung zu ermitteln, welcher bei der Auswertung der Positionsdaten verwendet wird. Dabei kann auch der wenigstens eine Unterraum selbst aus den Positionsdaten ermittelt werden. Zweckmäßigerweise ist oder wird der wenigstens eine Unterraum der ausgelösten stationären Auslöseeinrichtung und/oder positionsabhängig der ausgelösten, tragbaren Auslöseeinrichtung zugeordnet. Es ist aber auch möglich, dass der wenigstens eine Unterraum dem oder einem Fahrzeug zugeordnet ist oder wird. Der wenigstens eine Unterraum kann mithin als interessierender Bereich oder Relevanzbereich bezüglich der ausgelösten Auslöseeinrichtung oder des wenigstens einen Fahrzeugs aufgefasst werden, wobei bei mehreren sich in der Betriebsumgebung befindenden Fahrzeugen zweckmäßigerweise für jedes Fahrzeug ein Unterraum ermittelt wird.

Der wenigstens eine Unterraum beschreibt dabei einen insbesondere zusammenhängenden Teilbereich der Betriebsumgebung, welcher für die Ermittlung der Menge der anzuhaltenden Fahrzeuge von Relevanz ist. Der wenigstens eine Unterraum kann insbesondere einen durch das wenigstes eine Fahrzeug befahrbaren Fahrbahnbereich der Betriebsumgebung umfassen oder daraus bestehen. Durch die Ermittlung des wenigstens einen Unterraums wird vorteilhafterweise eine möglichst exakte Modellierung der räumlichen Gegebenheiten, insbesondere von Hindernissen, der Betriebsumgebung erzielt.

Um mit besonderem Vorteil eine aufwandsarm durch die Recheneinrichtung zu berechnende Ermittlung der Menge der anzuhaltenden Fahrzeuge zu ermöglichen wird es bevorzugt, wenn die Recheneinrichtung überprüft, ob sich die Position des oder wenigstens eines Fahrzeugs innerhalb eines als Umgebungsbereich der Auslöseeinrichtung gebildeten Unterraums befindet. Mithin werden jene Fahrzeuge in die Menge der anzuhaltenden Fahrzeuge aufgenommen, deren durch die Positionsdaten beschriebene Position innerhalb des bezüglich der ausgelösten Auslöseeinrichtung ermittelten Unterraums liegt. Alternativ oder zusätzlich kann die Recheneinrichtung überprüfen, ob sich die Position der Auslöseeinrichtung innerhalb wenigstens eines als Umgebungsbereich um das oder wenigstens ein Fahrzeug gebildeten Unterraums befindet. Folglich werden jene Fahrzeuge in die Menge der anzuhaltenden Fahrzeuge aufgenommen, bei denen ein bezüglich ihrer Position gebildeter Unterraum die Position der Auslöseeinrichtung umfasst. Es ist im Rahmen des erfindungsgemäßen Verfahrens aber auch denkbar, dass wenigstens ein solches Fahrzeug in die Menge der anzuhaltenden Fahrzeuge aufgenommen wird, bei dem sich der zugeordnete Unterraum sich mit dem der ausgelösten Auslöseeinrichtung zugeordneten Unterraum überschneidet. Dadurch werden unter Umständen mehr Fahrzeuge in die Menge der anzeigenden Fahrzeuge aufgenommen, als bei der zuvor beschriebenen Überprüfung, ob sich die Position der Auslöseeinrichtung bzw. des Fahrzeugs in einem Unterraum befindet.

Es kann auch vorgesehen sein, dass der der Auslöseeinrichtung zugeordnete Unterraum einen für eine die Auslöseeinrichtung auslösende Person einsehbaren Bereich der Betriebsumgebung und/oder der wenigstens eine dem oder wenigstens einem Fahrzeug zugeordnete Unterraum einen für eine sich an der Position des Fahrzeugs befindliche Person einsehbaren Bereich der Betriebsumgebung beschreibt. Der Unterraum ist dann auch als Sichtbereich bezüglich der Auslöseeinrichtung bzw. des Fahrzeugs auffassbar, so dass als Kriterium für das Anhalten eines Fahrzeugs dessen Sichtbarkeit aus der Perspektive der Auslöseeinrichtung oder umgekehrt verwendet wird. Dies beruht auf der Überlegung, dass die Auslösung der Auslöseeinrichtung durch eine Person üblicherweise auf einer visuell erfassten Veranlassung beruht. Die die Auslöseeinrichtung auslösende Person kann beispielsweise sehen, dass sich ein Fahrzeug mit ihr auf Kollisionskurs befindet oder dass sich ein Fahrzeug auf einem Kollisionskurs mit einem Objekt befindet. Es ist mithin davon auszugehen, dass ein Anhaltesignal nur solche Fahrzeuge betreffen soll, zu denen eine Sichtlinie mit der Auslöseeinrichtung besteht. Zur Ermittlung des einsehbaren Bereichs kann die Recheneinrichtung beispielsweise Informationen berücksichtigen, die Sichthindernisse, insbesondere bauliche Sichthindernisse wie Wände oder Pfeiler, beschreiben. Durch die Sichthindernisse unverdeckte Bereiche können dann als Unterraum ermittelt werden. Es ist zudem möglich, dass der einsehbare Bereich um wenigstens einen an ihn anschließenden, nicht einsehbaren Erweiterungsbereich erweitert wird, um auch Fahrzeuge anhalten zu können, die sich zwar noch nicht im einsehbaren Bereich befinden, diese jedoch zeitnah erreichen könnten.

Wie bereits erwähnt wird typischerweise ein Anhaltesignal verwendet, welches bei einer aktiven Betätigung der Auslöseeinrichtung oder aufgrund eines Sensorsignals ausgelöst wird. Mit besonderem Vorteil wird bei dem erfindungsgemäßen Verfahren das Anhaltesignal auch bei einer Unterbrechung einer Kommunikationsverbindung zwischen der wenigstens einen Auslöseeinrichtung und der Recheneinrichtung ausgelöst. Eine solche Unterbrechung kann beispielsweise von einer Störung und/oder einer Fehlfunktion der Auslöseeinrichtung herrühren. Eine solche Störung einer Auslöseeinrichtung wird dann wie eine aktive Auslösung behandelt, um ein erhöhtes Sicherheitsniveau zu gewährleisten.

Es wird bei dem erfindungsgemäßen Verfahren zudem bevorzugt, wenn während einer vorgegebenen oder vorgebbaren Dauer nach dem Empfangen des Anhaltesignals und/oder bis zum Empfangen eines das Anhaltesignals aufhebenden Freigabesignals für das oder wenigstens ein Fahrzeug, das nicht der Menge der anzuhaltenden Fahrzeuge zugehört, die Positionsdaten erneut ausgewertet werden und das oder wenigstens ein Fahrzeug in Abhängigkeit dieses Auswerteergebnisses zum Anhalten angesteuert wird. Um sicherzustellen, dass auch nach einem erstmaligen Auswerten der Positionsdaten und Ansteuern des oder wenigstens eines Fahrzeugs bis auf Weiteres kein Verkehr in dem für die Position der ausgelösten Auslöseeinrichtung relevanten Bereich stattfindet, wird mithin eine erneute Auswertung und Ansteuerung vorgeschlagen. Diese bezieht sich jedoch auf Fahrzeuge, die infolge der erstmaligen Auswertung nicht in die Menge der anzuhaltenden Fahrzeuge aufgenommen wurden. Dazu kann eine Dauer vorgegeben sein oder vorgegeben werden, während welcher die erneute Auswertung gegebenenfalls auch mehrfach, durchgeführt wird. Alternativ oder zusätzlich kann dies solange erfolgen, bis die Recheneinrichtung das Freigabesignal erhält, wobei auch ein Wegfall des Anhaltesignals der ausgelösten Auslöseeinrichtung als ein Freigabesignal aufgefasst werden kann.

Daneben ist es bei dem erfindungsgemäßen Verfahren zweckmäßig, wenn die Recheneinrichtung die Positionsdaten zumindest teilweise aus von Sensordaten einer innerhalb der Betriebsumgebung angeordneten Sensoreinrichtung ermittelt. Die Sensoreinrichtung stellt der Recheneinrichtung dabei zweckmäßigerweise Sensordaten bereit, die sich in der Betriebsumgebung befindende Objekte beschreiben. Es kann eine wenigstens eine Kamera und/oder wenigstens ein Radarsensor und/oder wenigstens ein Lasersensor aufweisende Sensoreinrichtung verwendet werden. Dadurch wird der Vorteil realisiert, dass insbesondere die Position des wenigstes ein Fahrzeugs und/oder der wenigstens einen tragbaren Auslöseeinrichtung beschreibende Positionsdaten besonders einfach erfasst werden können. Dabei wird es bevorzugt, wenn die Recheneinrichtung ohnehin zur Steuerung der Bewegung der Fahrzeuge während ihres Aufenthalts in der Betriebsumgebung ausgebildet ist und dazu die Sensordaten berücksichtigt.

Bei dem erfindungsgemäßen Verfahren ist es ferner von Vorteil, wenn die Recheneinrichtung die Betriebsumgebung beschreibende Kartendaten verwendet, wobei bei der Auswertung der Positionsdaten die Kartendaten berücksichtigt und/oder die Positionsdaten zumindest teilweise aus den Kartendaten ermittelt werden. Auf Basis einer durch die Kartendaten beschriebenen Karte, insbesondere einer 2-D- oder 3-D-Karte, kann beispielsweise der wenigstens eine Unterraum bestimmt werden und/oder besonders einfach überprüft werden, ob sich die Position der Auslöseeinrichtung und/oder die Position des oder wenigstens eines Fahrzeugs im Unterraum befindet. In diesem Zusammenhang lassen sich auch Sichthindernisse innerhalb der Betriebsumgebung beschreibende Information aus den Kartendaten ableiten. Außerdem ist es zweckmäßig, wenn die die Position einer stationären Auslöseeinrichtung beschreibenden Positionsdaten aus den Kartendaten ermittelt werden.

Eine weitere vorteilhafte Ausgestaltung des erfindungsgemäßen Verfahrens ergibt sich, wenn die Recheneinrichtung zum Ansteuern der anzuhaltenden Fahrzeuge das Anhaltesignal an diese weiterleitet. In diesem Fall fungiert die Recheneinrichtung als Router, welcher die Koordination des Anhaltesignals von der wenigstens einen Auslöseeinrichtung zu dem oder wenigstens einem Fahrzeug realisiert. Das Verfahren lässt sich so aufwandsarm in herkömmliche Systeme mit Auslöseeinrichtungen in der Betriebsumgebung integrieren.

Betriebsumgebungen, in denen das erfindungsgemäße Verfahren durchgeführt wird lassen sich grundsätzlich als intelligente Zonen beschreiben, in denen durch die Recheneinrichtung Steuerungsaufgaben zum Leiten von zumindest teilautonom betriebenen Fahrzeugen durchgeführt werden. Besonders bevorzugt wird das erfindungsgemäße Verfahren in einer als Parkanlage für Kraftfahrzeuge ausgebildeten Betriebsumgebung durchgeführt. Eine solche Parkanlage kann ein Parkhaus, insbesondere mit mehreren Parkebenen, oder ein Parkplatz mit mehreren Stellplätzen sein. Alternativ kann das erfindungsgemäße Verfahren auch in einer Betriebsumgebung für als Transportmittel ausgebildete Fahrzeuge durchgeführt werden. Solche Transportmittel (z. B. Flurfördermittel) dienen insbesondere dem Warentransport, also nicht der Personenbeförderung, wobei die Betriebsumgebung beispielsweise eine Industrieanlage oder ein Warenlager sein kann. Da sich in solchen Umgebungen häufig Funktionspersonal aufhält, kann dieses durch die Auslöseeinrichtung ein Anhalten des Verkehrs in den relevanten Bereichen der Parkanlage bzw. der Betriebsumgebung für die Transportmittel initiieren.

Daneben betrifft die Erfindung ein Bauwerk, welches als Betriebsumgebung für wenigstens ein zumindest teilautonom betreibbares Fahrzeug ausgebildet ist, umfassend wenigstens eine zum Erzeugen eines Anhaltesignals zum Anhalten des oder wenigstens eines Fahrzeugs ausgebildete Auslöseeinrichtung. Das erfindungsgemäße Bauwerk zeichnet sich dadurch aus, dass eine Recheneinrichtung vorgesehen ist, die derart programmiert ist, dass sie die Verfahrensschritte eines Verfahrens der vorstehend beschriebenen Art durchführen kann. Das Bauwerk weist insbesondere wenigstens eine Fahrbahn für das oder wenigstens ein Fahrzeug auf und ist bevorzugt als Parkanlage für Kraftfahrzeuge ausgebildet. Sämtliche Ausführungen zum erfindungsgemäßen Verfahren lassen sich analog auf das erfindungsgemäße Bauwerk übertragen, so dass auch mit diesen die zuvor genannten Vorteile erzielt werden können.

Weitere Einzelheiten und Vorteile der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines erfindungsgemäßen Bauwerks aus der Vogelperspektive als Betriebsumgebung für mehrere autonom betriebene Fahrzeuge; und
- Fig. 2: ein Flussdiagramm eines erfindungsgemäßen Verfahrens zum Steuern der sich innerhalb der in Fig. 1 gezeigten Betriebsumgebung bewegenden Fahrzeuge.

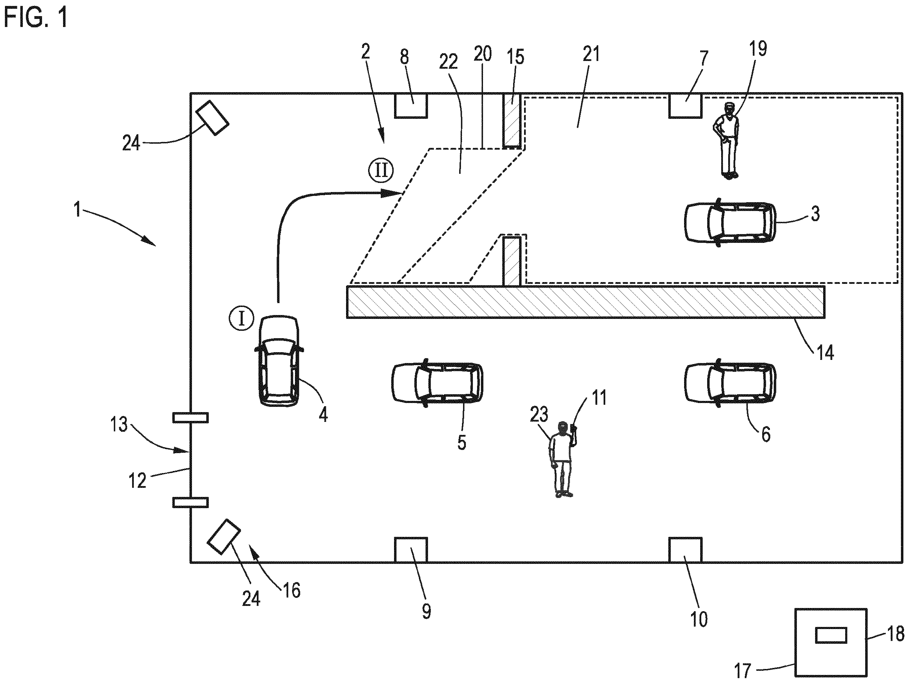

Fig. 1 zeigt eine Prinzipskizze eines Bauwerks 1 aus der Vogelperspektive als Betriebsumgebung 2 für mehrere autonom betriebene Fahrzeuge 3-6. Das Bauwerk 1 ist vorliegend als Parkanlage, beispielsweise als Parkhaus oder als offener Parkplatz mit mehreren nicht gezeigten Stellplätzen ausgebildet. Alternativ kann das Bauwerk 1 auch eine Betriebsumgebung 2 für als Transportmittel ausgebildete Fahrzeuge 3-6, wie Flurfördermittel, sein, z. B. eine Industrieanlage oder ein Warenlager. Innerhalb des Bauwerks 1 befinden sich mehrere stationäre, als manuelle Betätigungseinrichtungen in Form von Drückschaltern oder Berührschaltern ausgebildete Auslöseeinrichtungen 7-10, eine tragbare Auslöseeinrichtung 11 und eine weitere als Unterbrechungssensor in Form einer Lichtschranke ausgebildete Auslöseeinrichtung 12. Letztere sichert einen Zugang 13 des Bauwerks 1 vor unbefugtem Betreten. Durch mehrere Sichthindernisse in Form von Wänden 14, 15 sind verschiedene Teile der Betriebsumgebung 2 nicht vollständig einsehbar.

Im Bauwerk 1 ist eine Sensoreinrichtung 16, umfassend zwei Kameras 24 und weitere nicht gezeigte Radar- und Lasersensoren, installiert. Daneben ist dem Bauwerk 1 eine rein schematisch dargestellte, stationäre Recheneinrichtung 17 mit einer Kommunikationseinrichtung 18 zur Datenkommunikation mit den Fahrzeugen 3-6, der Sensoreinrichtung 16 und den Auslöseeinrichtungen 7-10 zugeordnet. Letztere sind dazu ausgebildet, bei ihrem Auslösen ein Anhaltesignal an die Recheneinrichtung 18 zu übertragen.

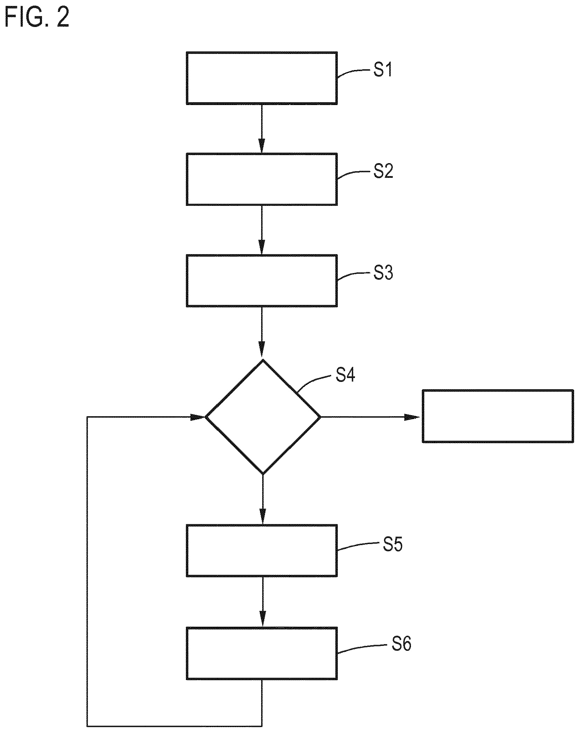

Fig. 2 zeigt ein Flussdiagramm eines Verfahrens zum Steuern der sich in der Betriebsumgebung 2 bewegenden Fahrzeuge 3-6, demgemäß die Recheneinrichtung 17 betreibbar ist und welches anhand der in Fig. 1 gezeigten Verkehrssituation im Folgenden beschrieben wird:
In einem Schritt S1 empfängt die Recheneinrichtung 17 über die Kommunikationseinrichtung 18 ein Anhaltesignal der Auslöseeinrichtung 7 infolge einer Betätigung der Betätigungseinrichtung durch eine Person 19, welche beispielsweise aufgrund einer visuell erkannten Kollisionsgefahr mit einem Objekt in der Betriebsumgebung 2 einen Nothalt initiieren will.

In einem Schritt S2 wertet die Recheneinrichtung 17 Positionsdaten, welche die Position der ausgelösten Auslöseeinrichtung 7 und die Positionen der sich in der Betriebsumgebung 2 befindenden Fahrzeuge 3-6 beschreiben, zur Ermittlung einer Menge von anzuhaltenden Fahrzeugen aus. Dazu ermittelt sie zunächst einen Unterraum 20 der Betriebsumgebung 2, welcher der Auslöseeinrichtung 7 zugeordnet ist und als ein von der Person 19 einsehbarer Bereich 21 bestimmt wird. Da die Auslöseeinrichtung 7 stationär am Bauwerk 1 angeordnet ist, greift die Recheneinrichtung 17 zur Ermittlung der Position der Auslöseeinrichtungen 7 auf Kartendaten zurück, welche die Betriebsumgebung 2 beschreiben. Den einsehbaren Bereich 21 ermittelt die Recheneinrichtung 17 ebenfalls unter Verwendung der Kartendaten, in welchen die Wände 14,15 verzeichnet sind. Der Unterraum 20 wird außerdem um einen unmittelbar den einsehbaren Bereich 21 angrenzenden Erweiterungsbereich 22 erweitert.

Durch diese Bestimmung des Unterraums 20 wird sichergestellt, dass nur solche Fahrzeuge 3-6 aufgrund des Anhaltesignals angehalten werden, von den ausgenommen werden kann, dass die Person 19 ein Anhalten bezweckt. Als Kriterium für einen relevanten räumlichen Bereich der Betriebsumgebung 2 wird dabei eine Einsehbarkeit aus der Perspektive der Person 19 verwendet, wobei der einsehbare Bereich 21 zur Sicherheit um den daran angrenzenden Erweiterungsbereich 22 erweitert wird. Die Recheneinrichtung 17 überprüft sodann, welche Fahrzeuge 3-6 sich innerhalb des Unterraums 20 befinden. Dazu wertet die Recheneinrichtung 17 die Positionsdaten aller Fahrzeuge 3-6 aus, welche sie aus den Sensordaten der Sensoreinrichtung 16 ermittelt oder alternativ als eigene Positionsangabe von den Fahrzeugen 3-6 abruft. Das Ergebnis dieser Auswertung ist, dass sich lediglich das Fahrzeug 3 im Unterraum 20 befindet und folglich nur dieses in die Menge anzuhaltender Fahrzeuge aufgenommen wird.

In einem anschließenden Schritt S3 steuert die Recheneinrichtung 17 die Fahrzeuge 3-6 in Abhängigkeit des Auswertungsergebnisses aus dem Schritt S2 zum Anhalten an, wobei vorliegend lediglich das Fahrzeug 3 zum Anhalten und die Fahrzeuge 4-6 zum Weiterfahren angesteuert werden. Von dem Auslösen der Auslöseeinrichtung 7 wird der Betrieb der Fahrzeuge 4-6 mithin nicht beeinträchtigt, da davon auszugehen ist, dass die Person 19 diese weit von dem einsehbaren Bereich 21 entfernten Fahrzeuge 4-6 nicht Anhalten wollte.

In einem folgenden Schritt S4 wird durch die Recheneinrichtung 17 eine Abbruchbedingung für das weitere Anhalten von Fahrzeugen in der Betriebsumgebung 2 überprüft. Dieses ist erfüllt, wenn eine vorgegebene Dauer nach dem Empfangen des Anhaltesignals verstrichen ist oder ein das Anhaltesignal aufhebendes Freigabesignal empfangen wird. Zur Erzeugung dieses Freigabesignals kann beispielsweise an den Auslöseeinrichtungen 7-12 ein Freigabeschalter vorgesehen sein. Ebenso kann ein Wegfall des Anhaltesignals als Freigabesignal gewertet werden.

Ist dies nicht der Fall, so wertet die Recheneinrichtung 17 in einem Schritt S5 für die nicht bereits in die Menge der anzuhaltenden Fahrzeuge aufgenommenen Fahrzeuge 4-6 anhand der Positionsdaten erneut aus, ob sich diese im Unterraum 20 befinden. Wie aus Fig. 1 ersichtlich bewegt sich beispielsweise das Fahrzeug 4 von einer Position I zum Zeitpunkt der Ausführung des Schritts S3 an eine Position II, in der es den Erweiterungsbereich 22 des Unterraums 20 erreicht. Zu diesem Zeitpunkt ergibt die Auswertung im Schritt S5 mithin, dass sich das Fahrzeug 4 im Unterraum 20 befindet, wonach es zusätzlich die Menge der anzuhaltenden Fahrzeuge aufgenommen wird.

In einem anschließenden Schritt S6 wird analog zum Schritt S5 das nachträglich in die Liste der anzuhaltenden Fahrzeuge aufgenommene Fahrzeug 4 zum Anhalten angesteuert. Das Verfahren setzt dann im Schritt S4 die kontinuierlichen Überprüfung, ob sich weitere Fahrzeuge 5-6 zu späteren Zeitpunkten im Unterraum 20 befinden, fort. Mithin werden die Schritte S5 und S6 während der vorgegebenen Dauer nach dem Empfangen des Anhaltesignals bzw. bis zum Empfangen des Freigabesignals durchgeführt.

Ist im Schritt S4 die Abbruchbedingung erfüllt, so wird das Verfahren in einem Schritt S7 fortgesetzt, in dem die angehalten Fahrzeuge 3, 4 zum Weiterfahren angesteuert werden. Das Verfahren endet in diesem Schritt.

Analog dazu wird gemäß weiteren Ausführungsbeispielen des Verfahrens in der in Fig. 1 gezeigten Verkehrssituation bei einem Auslösen der Auslöseeinrichtung 8 nur das Fahrzeug 4 und bei einer entsprechenden Bestimmung eines Erweiterungsbereichs zusätzlich auch das Fahrzeug 3 angehalten. Bei einem Auslösen der stationären Auslöseeinrichtungen 9, 10 werden hingegen die Fahrzeuge 4-6 zum Anhalten angesteuert. Dies lässt sich auch auf eine Auslösung der als Lichtschranke ausgebildeten Auslöseeinrichtung 12 übertragen, wobei die ihre Position beschreibenden Positionsdaten ebenfalls aus den Kartendaten ermittelt werden. Im vorliegenden Fall würde bei einem Auslösen der Auslöseeinrichtung 12, beispielsweise wenn eine Person unerwartet und/oder unbefugt die Betriebsumgebung 2 durch den Zugang 13 betritt, ebenfalls ein Anhalten der Fahrzeuge 4-6 erfolgen.

Gemäß einem weiteren Ausführungsbeispiel des Verfahrens betätigt eine Person 23, welche die tragbare Auslöseeinrichtung 11 mit sich führt, deren manuelle Betätigungseinrichtung, so dass die Recheneinrichtung 17 analog zum ersten Ausführungsbeispiel das Auslösesignal im Schritt S1 drahtlos empfängt. Da die Auslöseeinrichtung 11 jedoch eine variable Position innerhalb der Betriebsumgebung 2 aufweist, werden die die Position der Auslöseeinrichtung 11 beschreibenden Positionsdaten im Schritt S2 durch die Recheneinrichtung 17 nicht aus den Kartendaten ermittelt, sondern mittels eines Positionsbestimmungsverfahrens, beispielsweise mittels Simultaneous Localization and Mapping (SLAM), Dead Reconing oder eines laser-, funk- oder QR-Tag-basierten Positionsbestimmungsverfahrens, ermittelt. Der der Auslöseeinrichtung 12 zugeordnete Unterraum wird dementsprechend positionsabhängig ebenfalls als für die Person 23 einsehbarer Bereich gebildet. Alternativ oder zusätzlich kann bei der Ermittlung der Position der Auslöseeinrichtung 11 auch auf Sensordaten der Sensoreinrichtung 16 zurückgegriffen werden.

Gemäß einem weiteren Ausgangsbeispiel, das sich auf alle vorgenannten Ausführungsbeispiele übertragen lässt, kann anstelle der Bestimmung des Unterraums 20 als Umgebungsbereich der jeweiligen Auslöseeinrichtung 7-12 in den Schritten S2, S5 für jedes Fahrzeug 3-6 ein Unterraum als Umgebungsbereich bestimmt, der einen für eine sich an der Position des jeweiligen Fahrzeugs 3-6 befindliche Person einsehbaren Bereich der Betriebsumgebung beschreibt. Eine Aufnahme eines Fahrzeugs 3-6 in die Menge der anzuhaltenden Fahrzeuge erfolgt dabei, wenn sich die Position der ausgelösten Auslöseeinrichtung 7-12 in dem dem jeweiligen Fahrzeug 3-6 zugeordneten Unterraum befindet. Es ist schließlich auch eine Kombination dieser Ausführungsbeispiele denkbar, bei der in den Schritten S2, S5 sowohl ein der ausgelösten Auslöseeinrichtung 7-12 zugeordneter Unterraum als auch den Fahrzeugen 3-6 zugeordnete Unterräume bestimmt werden, wobei eine Aufnahme eines Fahrzeugs 3-6 in die Menge der anzuhaltenden Fahrzeuge erfolgt, wenn sich der Unterraum der ausgelösten Auslöseeinrichtung 7-12 mit dem Unterraum des aufzunehmenden Fahrzeugs 3-6 überschneidet.

Schließlich ist noch anzumerken, dass gemäß weiteren Ausführungsbeispielen die Auswertung in den Schritten S2, S5 auch ergeben kann, dass kein Fahrzeug 3-6 in die Menge der anzuhaltenden Fahrzeuge aufzunehmen ist, so dass die Menge leer ist. In diesem Fall werden alle Fahrzeuge 3-6 in den Schritten S3, S6 zum Weiterfahren angesteuert. Selbst verständlich kann die Auswertung in den Schritten S2, S5 in anderen Betriebsfällen auch ergeben, dass alle sich in der Betriebsumgebung 2 befindenden Fahrzeuge 3-6 in die Menge der anzuhaltenden Fahrzeuge aufzunehmen sind, wobei alle Fahrzeuge 3-6 in den Schritten S3, S6 zum Anhalten angesteuert werden.

## Patentansprüche

1. Verfahren zum Steuern wenigstens eines sich zumindest teilautonom innerhalb einer Betriebsumgebung (2) bewegenden Fahrzeugs (3-6), innerhalb welcher sich wenigstens eine zum Auslösen eines Anhaltesignals zum Anhalten des oder wenigstens eines Fahrzeugs (3-6) ausgebildete Auslöseeinrichtung (7-12) befindet,
**dadurch gekennzeichnet,**
**dass** eine der Betriebsumgebung (2) zugeordnete Recheneinrichtung (17) folgende Schritte ausführt:
- Empfangen eines Anhaltesignals einer ausgelösten Auslöseeinrichtung (7-12);
- Ermitteln einer Menge von anzuhaltenden Fahrzeugen durch Auswerten von Positionsdaten, welche die Position der ausgelösten Auslöseeinrichtung (7-12) und eine Position des oder wenigstens eines sich in der Betriebsumgebung (2) befindenden Fahrzeugs (3-6) beschreiben; und
- Ansteuern des oder wenigstens eines Fahrzeugs (3-6) zum Anhalten in Abhängigkeit des Auswertungsergebnisses.

2. Verfahren nach Anspruch 1
**dadurch gekennzeichnet,**
**dass** wenigstens eine stationäre Auslöseeinrichtung (7-10, 12) und/oder wenigstens eine tragbare Auslöseeinrichtung (11) verwendet wird oder werden.

3. Verfahren nach Anspruch 1 oder 2,
**dadurch gekennzeichnet,**
**dass** eine als manuelle Betätigungseinrichtung ausgebildete Auslöseeinrichtung (7-11) und/oder eine einen Unterbrechungssensor umfassende Auslöseeinrichtung (12) und/oder eine einen Näherungssensor umfassende Auslöseeinrichtung verwendet wird oder werden.

4. Verfahren nach einem der vorhergehenden Ansprüche,
**dadurch gekennzeichnet,**
**dass** die Menge der anzuhaltenden Fahrzeuge unter Berücksichtigung wenigstens eines Unterraums (20) der Betriebsumgebung (2) ermittelt wird, welcher der ausgelösten stationären Auslöseeinrichtung (7-10, 12) und/oder positionsabhängig der ausgelösten, tragbaren Auslöseeinrichtung (11) und/oder dem oder einem Fahrzeug (3-6) zugeordnet ist oder wird.

5. Verfahren nach Anspruch 4,
**dadurch gekennzeichnet,**
**dass** die Recheneinrichtung (17) überprüft, ob sich die Position des oder wenigstens eines Fahrzeugs (3-6) innerhalb eines als Umgebungsbereich der Auslöseeinrichtung (7-12) gebildeten Unterraums (20) befindet und/oder ob sich die Position der Auslöseeinrichtung (7-12) innerhalb wenigstens eines als Umgebungsbereich um das oder wenigstens ein Fahrzeug (3-6) gebildeten Unterraums befindet.

6. Verfahren nach Anspruch 4 oder 5,
**dadurch gekennzeichnet,**
**dass** der der Auslöseeinrichtung (7-12) zugeordnete Unterraum (20) einen für eine die Auslöseeinrichtung (7-12) auslösende Person (13, 23) einsehbaren Bereich der Betriebsumgebung beschreibt und/oder der wenigstens eine dem oder wenigstens einem Fahrzeug (3-6) zugeordnete Unterraum einen für eine sich an der Position des Fahrzeugs (3-6) befindliche Person einsehbaren Bereich der Betriebsumgebung (2) beschreibt.

7. Verfahren nach einem der vorhergehenden Ansprüche,
**dadurch gekennzeichnet,**
**dass** das Anhaltesignal auch bei einer Unterbrechung einer Kommunikationsverbindung zwischen der wenigstens einen Auslöseeinrichtung (7-12) und der Recheneinrichtung (17) ausgelöst wird.

8. Verfahren nach einem der vorhergehenden Ansprüche,
**dadurch gekennzeichnet,**
**dass** während einer vorgegebenen oder vorgebbaren Dauer nach dem Empfangen des Anhaltesignals und/oder bis zum Empfangen eines das Anhaltesignals aufhebenden Freigabesignals für das oder wenigstens ein Fahrzeug, das nicht der Menge der anzuhaltenden Fahrzeuge zugehört, die Positionsdaten erneut ausgewertet werden und das oder wenigstens ein Fahrzeug (3-6) in Abhängigkeit dieses Auswerteergebnisses zum Anhalten angesteuert wird.

9. Verfahren nach einem der vorhergehenden Ansprüche,
**dadurch gekennzeichnet,**
**dass** die Recheneinrichtung (17) die Positionsdaten zumindest teilweise aus von Sensordaten einer innerhalb der Betriebsumgebung (2) angeordneten Sensoreinrichtung (16) ermittelt.

10. Verfahren nach einem der vorhergehenden Ansprüche,
**dadurch gekennzeichnet,**
**dass** die Recheneinrichtung (17) die Betriebsumgebung beschreibende Kartendaten verwendet, wobei bei der Auswertung der Positionsdaten die Kartendaten berücksichtigt und/oder die Positionsdaten zumindest teilweise aus den Kartendaten ermittelt werden.

11. Verfahren nach einem der vorhergehenden Ansprüche,
**dadurch gekennzeichnet,**
**dass** die Recheneinrichtung (17) zum Ansteuern der anzuhaltenden Fahrzeuge (3-6) das Anhaltesignal an diese weiterleitet.

12. Verfahren nach einem der vorhergehenden Ansprüche,
**dadurch gekennzeichnet,**
**dass** es in einer als Parkanlage für Kraftfahrzeuge ausgebildeten Betriebsumgebung (2) oder in einer Betriebsumgebung (2) für als Transportmittel ausgebildete Fahrzeuge durchgeführt wird.

13. Bauwerk, welches als Betriebsumgebung (2) für wenigstens ein zumindest teilautonom betreibbares Fahrzeug (3-6) ausgebildet ist, umfassend wenigstens eine zum Erzeugen eines Anhaltesignals zum Anhalten des oder wenigstens eines Fahrzeugs (3-6) ausgebildete Auslöseeinrichtung (7-12),
**dadurch gekennzeichnet,**
**dass** eine Recheneinrichtung (17) vorgesehen ist, die derart programmiert ist, dass sie die Verfahrensschritte eines Verfahrens nach einem der vorangehenden Ansprüche ausführen kann.

## Claims

1. Method for controlling at least one vehicle (3-6) that moves at least partially autonomously within an operating environment (2) within which at least one trigger device (7-12) is located that is designed to trigger a stopping signal for stopping the vehicle or at least one vehicle (3-6),
**characterised in that**
a computing device (17) which is assigned to the operating environment (2) carries out the following steps:
- receiving a stopping signal of a triggered trigger device (7-12);
- ascertaining a quantity of vehicles to be stopped by evaluating position data which describe the position of the triggered trigger device (7-12) and a position of the vehicle or of at least one vehicle (3-6) located in the operating environment (2); and
- actuating the vehicle or at least one vehicle (3-6) so as to stop on the basis of the evaluation result.

2. Method according to claim 1
**characterised in that**
at least one stationary trigger device (7-10, 12) and/or at least one portable trigger device (11) is or are used.

3. Method according to claim 1 or 2,
**characterised in that**
a trigger device (7-11) designed as manual actuating device and/or a trigger device (12) comprising an interrupt sensor and/or a trigger device comprising a proximity sensor is or are used.

4. Method according to any one of the preceding claims,
**characterised in that**
the quantity of the vehicles to be stopped is ascertained taking into account at least one subspace (20) of the operating environment (2), which is or is being assigned to the triggered stationary trigger device (7-10, 12) and/or, depending on position, to the triggered, portable trigger device (11) and/or to the or a vehicle (3-6).

5. Method according to claim 4, **characterised in that** the computing device (17) checks, whether the position of the vehicle or of at least one vehicle (3-6) is located within a subspace (20) formed as surrounding region of the trigger device (7-12) and/or whether the position of the trigger device (7-12) is located within at least one subspace formed as surrounding region around the vehicle or at least one vehicle (3-6).

6. Method according to claim 4 or 5,
**characterised in that**
the subspace (20) assigned to the trigger device (7-12) describes a region of the operating environment that is visible to a person (13, 23) triggering the trigger device (7-12) and/or the at least one subspace assigned to the vehicle or to at least one vehicle (3-6) describes a region of the operating environment (2) that is visible to a person located in the position of the vehicle (3-6).

7. Method according to any one of the preceding claims, **characterised in that** the stopping signal is triggered even in the event of an interruption of a communication link between the at least one trigger device (7-12) and the computing device (17).

8. Method according to any one of the preceding claims,
**characterised in that**
during a specified or specifiable duration after the receiving of the stopping signal and/or until the receiving of a release signal cancelling the stopping signal for the vehicle or at least one vehicle, which is not part of the quantity of the vehicles to be stopped, the position data are re-evaluated and the vehicle or at least one vehicle (3-6) is actuated so as to stop on the basis of this evaluation result.

9. Method according to any one of the preceding claims,
**characterised in that**
the computing device (17) ascertains the position data at least in part from sensor data of a sensor device (16) disposed inside the operating environment (2).

10. Method according to any one of the preceding claims,
**characterised in that**
the computing device (17) uses card data describing the operating environment, whereby in the evaluation of the position data the card data are taken into account and/or the position data are ascertained at least in part from the card data.

11. Method according to any one of the preceding claims,
**characterised in that**
to actuate the vehicles (3-6) to be stopped, the computing device (17) forwards the stopping signal to these.

12. Method according to any one of the preceding claims,
**characterised in that**
it is carried out in an operating environment (2) designed as parking facility for motor vehicles or in an operating environment (2) for vehicles designed as means of transport.

13. Building structure, which is designed as operating environment (2) for at least one vehicle (3-6) that can be operated at least partially autonomously, comprising at least one trigger device (7-12) designed to generate a stopping signal to stop the vehicle or at least one vehicle (3-6),
**characterised in that**
a computing device (17) is provided, which is programmed, such that it can execute the method steps of a method according to any one of the preceding claims.

## Revendications

1. Procédé de commande d'au moins un véhicule (3-6) se déplaçant au moins de façon partiellement autonome à l'intérieur d'un environnement de fonctionnement (2), à l'intérieur duquel se trouve au moins un dispositif de déclenchement (7-12) réalisé pour le déclenchement d'un signal d'arrêt pour l'arrêt du ou d'au moins un véhicule (3-6),
**caractérisé en ce**
**qu'**un dispositif de calcul (17) associé à l'environnement de fonctionnement (2) effectue les étapes suivantes :
- réception d'un signal d'arrêt d'un dispositif de déclenchement (7-12) déclenché ;
- détermination d'une quantité de véhicules à arrêter par évaluation de données de position, lesquelles décrivent la position du dispositif de déclenchement (7-12) déclenché et une position du ou d'au moins un véhicule (3-6) se trouvant dans l'environnement de fonctionnement (2) ; et
- commande du ou d'au moins un véhicule (3-6) pour l'arrêter en fonction du résultat d'évaluation.

2. Procédé selon la revendication 1
**caractérisé en ce**
**qu'**au moins un dispositif de déclenchement stationnaire (7-10, 12), et/ou au moins un dispositif de déclenchement portable (11) est ou sont utilisé(s).

3. Procédé selon la revendication 1 ou 2,
**caractérisé en ce**
**qu'**un dispositif de déclenchement (7-11) réalisé en tant que dispositif d'actionnement et/ou un dispositif de déclenchement (12) comprenant un capteur d'interruption et/ou un dispositif de déclenchement comprenant un capteur de proximité est ou sont utilisé(s).

4. Procédé selon l'une quelconque des revendications précédentes,
**caractérisé en ce**
**que** la quantité de véhicules à arrêter est déterminée en tenant compte d'au moins un espace inférieur (20) de l'environnement de fonctionnement (2), qui est/sont associé(s) au dispositif de déclenchement stationnaire (7-10, 12) déclenché et/ou en fonction de la position au dispositif de déclenchement portable (11) déclenché et/ou au ou à un véhicule (3-6).

5. Procédé selon la revendication 4,
**caractérisé en ce**
**que** le dispositif de calcul (17) vérifie si la position du ou d'au moins un véhicule (3-6) se trouve à l'intérieur d'un espace inférieur (20) formé en tant que zone d'environnement du dispositif de déclenchement (7-12) et/ou si la position du dispositif de déclenchement (7-12) se trouve à l'intérieur d'au moins un espace inférieur formé en tant que zone d'environnement autour du ou d'au moins un véhicule (3-6).

6. Procédé selon la revendication 4 ou 5,
**caractérisé en ce**
**que** l'espace inférieur (20) associé au dispositif de déclenchement (7-12) décrit une zone de l'environnement de fonctionnement visible à une personne (13, 23) déclenchant le dispositif de déclenchement (7-12) et/ou l'au moins un espace inférieur associé au ou à au moins un véhicule (3-6) décrit une zone de l'environnement de fonctionnement (2) visible à une personne se trouvant à la position du véhicule (3-6).

7. Procédé selon l'une quelconque des revendications précédentes,
**caractérisé en ce**
**que** le signal d'arrêt est également déclenché lors d'une interruption d'une liaison de communication entre l'au moins un dispositif de déclenchement (7-12) et le dispositif de calcul (17).

8. Procédé selon l'une quelconque des revendications précédentes,
**caractérisé en ce**
**que** pendant une durée prédéfinie ou prédéfinissable après la réception du signal d'arrêt et/ou jusqu' à la réception d'un signal de libération annulant le signal d'arrêt pour le ou au moins un véhicule, qui ne fait pas partie de la quantité de véhicules à arrêter, les données de position sont à nouveau évaluées et le ou au moins un véhicule (3-6) est commandé en fonction de ce résultat d'évaluation pour l'arrêt.

9. Procédé selon l'une quelconque des revendications précédentes,
**caractérisé en ce**
**que** le dispositif de calcul (17) détermine les données de position au moins en partie à partir de données de capteur d'un dispositif de capteur (16) agencé à l'intérieur de l'environnement de fonctionnement (2).

10. Procédé selon l'une quelconque des revendications précédentes,
**caractérisé en ce**
**que** le dispositif de calcul (17) utilise des données cartographiques décrivant l'environnement de fonctionnement, dans lequel lors de l'évaluation des données de position, les données cartographiques sont prises en compte et/ou les données de position sont déterminées au moins en partie à partir de données cartographiques.

11. Procédé selon l'une quelconque des revendications précédentes,
**caractérisé en ce**
**que** le dispositif de calcul (17) transmet pour la commande des véhicules (3-6) à arrêter le signal d'arrêt à ceux-ci.

12. Procédé selon l'une quelconque des revendications précédentes,
**caractérisé en ce**
**qu'**il est effectué dans un environnement de fonctionnement (2) réalisé en tant qu'installation de stationnement pour véhicules automobiles ou dans un environnement de fonctionnement (2) pour des véhicules réalisés en tant que moyen de transport.

13. Construction, laquelle est réalisée en tant qu'environnement de fonctionnement (2) pour au moins un véhicule (3-6) à fonctionnement au moins partiellement autonome, comprenant au moins un dispositif de déclenchement (7-12) réalisé pour la génération d'un signal d'arrêt pour l'arrêt du ou d'au moins un véhicule (3-6),
**caractérisée en ce**
**qu'**un dispositif de calcul (17) est prévu, qui est programmé de sorte qu'il puisse effectuer les étapes de procédé d'un procédé selon l'une quelconque des revendications précédentes.
